# EUROPÄISCHE PATENTANMELDUNG

(11) **EP 3 928 913 A1**
(43) Veröffentlichungstag der Anmeldung: **29.12.2021**
(21) Anmeldenummer: 20182302.8
(22) Anmeldetag: 25.06.2020
(51) Int. Cl.: B23K 26/03

(54) **BEARBEITUNGSKOPF UND VERFAHREN ZUR LASERBEARBEITUNG**

(71) Anmelder: Bystronic Laser AG, 3362 Niederönz (CH)
(72) Erfinder: Pinder, Thomas, 01744 Dippoldiswalde (DE); Lüdi, Andreas, 3400 Burgdorf (CH)
(74) Vertreter: Patentanwälte Geyer, Fehners & Partner mbB

(57) **Zusammenfassung**

Es wird ein Bearbeitungskopf zur Laserbearbeitung eines Werkstücks bereitgestellt, mit einer ersten Schnittstelle für eine Bearbeitungslaserquelle zum Emittieren eines Bearbeitungslaserstrahls; einer zweiten Schnittstelle für eine Beleuchtungslichtquelle zum Emittieren eines linear polarisierten Beleuchtungslichtstrahls; einer Austrittsöffnung für den Bearbeitungslaserstrahl und den Beleuchtungslichtstrahl; einer dritten Schnittstelle für eine Detektoreinrichtung zum Detektieren des vom Werkstück reflektierten Beleuchtungslichtstrahls; und einer Führungsoptik zum zumindest teilweise koaxialen Führen des emittierten Beleuchtungslichtstrahls durch die Austrittsöffnung und des vom Werkstück durch die Austrittsöffnung reflektierten Beleuchtungslichtstrahls zur dritten Schnittstelle. Die Führungsoptik weist einen polarisierenden Strahlteiler zum Führen zumindest eines Teils des emittierten linear polarisierten Beleuchtungslichtstrahls in Richtung der Austrittsöffnung; und eine zwischen dem polarisierenden Strahlteiler und der Austrittsöffnung angeordnete Verzögerungsplatte auf. Es wird ferner ein Verfahren zur Laserbearbeitung eines Werkstücks bereitgestellt.

## Beschreibung

Prozess-Monitoring, d.h. die Überwachung eines Bearbeitungsprozesses, gewinnt für die Laserbearbeitung von Werkstücken, insbesondere für das Laserschneiden, eine immer größere Bedeutung. Bereits seit einiger Zeit wird versucht, das beim Schneiden entstehende Prozesslicht zur Überwachung und Regelung nutzbar zu machen. Zu diesem Zweck kann die Bearbeitungszone des Werkstücks, auch Prozesszone genannt, ortsaufgelöst mittels Kameratechnik oder einem anderen Detektor betrachtet werden. Dies birgt großes Potential für die Prozessanalyse, da neben der Prozesslichtintensität auch geometrische Informationen, insbesondere über den Schnittspalt, gewonnen werden können. Um geometrische Informationen zu erhalten, kann jedoch nicht nur das Prozesslicht genutzt werden, zusätzlich oder alternativ kann die Prozesszone aktiv beleuchtet werden.

Bei einem Bearbeitungskopf zur Laserbearbeitung können der Bearbeitungslaserstrahl und das Beleuchtungslicht durch eine Austrittsöffnung auf das Werkstück geleitet werden. Wird das vom Werkstück reflektierte Beleuchtungslicht mit einer Kamera innerhalb des Bearbeitungskopfes detektiert, muss das Beleuchtungslicht die Austrittsöffnung zweimal passieren, von der Beleuchtungslichtquelle hin zur Prozesszone und wieder zurück in Richtung Kamera. Die Austrittsöffnung kann abhängig von der Art der Laserbearbeitung verhältnismäßig klein sein. Beim Laserschneiden zum Beispiel kann je nach Schneidprozess und eingesetztem Schneidgas eine Apertur der Austrittsöffnung des Bearbeitungskopfes (auch Düse genannt) mit einem sehr kleinen Blendendurchmesser vorliegen. In einem derartigen Fall ist daher ein sehr steiler Einstrahlwinkel für das Beleuchtungslicht erwünscht.

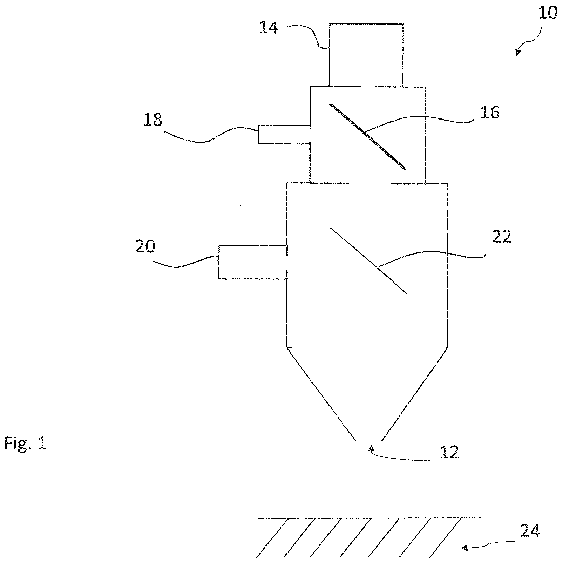

Bei einem Bearbeitungskopf können die Austrittsöffnung und die Kamera koaxial angeordnet sein. Zudem können der Bearbeitungslaserstrahl und der Beleuchtungslaserstrahl koaxial auf das Werkstück, z.B. über einen oder mehrere Einkoppelspiegel, geleitet werden. Fig. 1 zeigt beispielhaft schematisch einen Laserschneidkopf 10 mit einer Austrittsöffnung 12, einer koaxial mit der Austrittsöffnung angeordneten Kamera 14, einem Strahlteiler 16 für das Beleuchtungslicht, einer Beleuchtungslichtquelle 18, einer Bearbeitungslaserquelle 20, einem dichroitischen Spiegel 22 zum Umlenken des Bearbeitungslaserstrahls und einem zu bearbeitenden Werkstück 24.

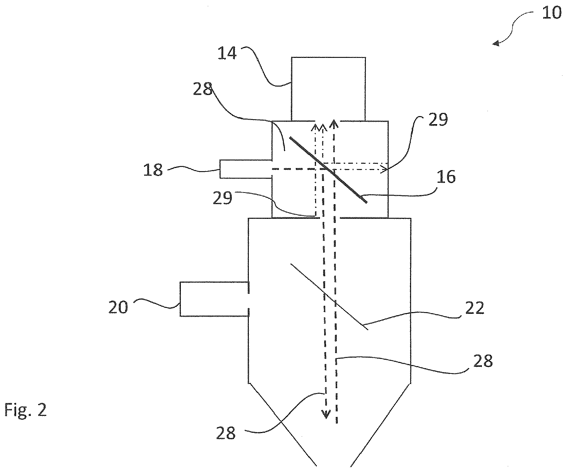

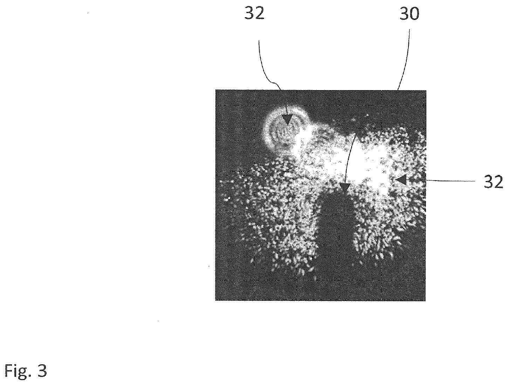

Typischerweise wird als Strahlteiler 16 ein 50:50-Strahlteiler eingesetzt, welcher das Beleuchtungslicht zu 50% reflektiert und zu 50% transmittiert. Eine Aufteilung der Beleuchtungslichtintensität in reflektiertes und transmittiertes Licht ist erwünscht, denn zunächst wird das Beleuchtungslicht am Strahlteiler in Richtung Austrittsöffnung 12 und Werkstück 24 umgelenkt und nach Reflektion am Werkstück 24 und erneutem Passieren der Austrittsöffnung 12 durch den Strahlteiler 16 zur Kamera 14 transmittiert. Mit einem 50:50-Strahlteiler kann jedoch nur maximal 25% des ausgesendeten Beleuchtungslichtes genutzt werden. Bei der Umlenkung des Beleuchtungslichts gehen bereits 50% des Lichtes verloren, beim Transmittieren des Beleuchtungslichts dann nochmals 50%. Die Überwachung des Bearbeitungsprozesses erfolgt daher an der Kamera 14 mit einer geringen Beleuchtungslichtausbeute. Ferner können an Grenzflächen und an Grenzschichten auf optischen Elementen, z.B. von Laseroptiken, und Blenden sowie an weiteren Bauteilen eines Bearbeitungskopfs unerwünschte Reflektionen des Beleuchtungslichtstrahls entstehen. In Fig. 2 ist der Laserschneidkopf 10 mit einem Beleuchtungslichtstrahl 28 und wesentlichen Reflektionsstellen 29 des Laserschneidkopfes 10 dargestellt, an denen unerwünschte Reflektionen des Beleuchtungslichtstrahls 28 typischerweise entstehen. Fig. 3 zeigt eine exemplarische Kameraaufnahme eines Schnittspalts 30 mit derartigen störenden Reflektionen 32. Die geringe Beleuchtungslichtausbeute an der Kamera und/oder störende Reflektionen verringern jedoch die Aussagekraft der Kameraaufnahmen, die bei der Überwachung des Bearbeitungsprozesses gewonnenen werden.

Eine beispielhafte Laseroptik ist in der US 2006/0196860 A1 beschrieben, in der mit zwei lambda/2-Platten und einer dazwischenliegenden rotierbaren Refraktionsoptik ein rotierbarer Bearbeitungslaserstrahl erzeugt wird. In der DE 102011119478 B4 wird ein Einkoppelspiegel für das Beleuchtungslicht vorgeschlagen, der zentral reflektierend und peripher durchlässig ist. Weitere Optiken von Laserbearbeitungsvorrichtungen sind beschrieben in US 2016/0193692 A1; DE 102018205545 A1; DE 102015121988 A1; US 2017/0043431 A1.

Aufgabe der Erfindung ist es, einen Bearbeitungskopf und ein Bearbeitungsverfahren anzugeben, die eine aussagekräftige Überwachung des Bearbeitungsprozesses ermöglichen.

Diese Aufgabe wird gelöst mit einem Bearbeitungskopf nach Anspruch 1, einer Bearbeitungsvorrichtung nach Anspruch 9, einer Verwendung nach Anspruch 10 und einem Verfahren zur Laserbearbeitung eines Werkstücks nach Anspruch 11.

Eine erste Ausführungsform der Erfindung betrifft einen Bearbeitungskopf zur Laserbearbeitung eines Werkstücks, insbesondere zum Laserschneiden, mit einer ersten Schnittstelle für eine Bearbeitungslaserquelle zum Emittieren eines Bearbeitungslaserstrahls; einer zweiten Schnittstelle für eine Beleuchtungslichtquelle zum Emittieren eines linear polarisierten Beleuchtungslichtstrahls; einer Austrittsöffnung für den Bearbeitungslaserstrahl und den Beleuchtungslichtstrahl; einer dritten Schnittstelle für eine Detektoreinrichtung zum Detektieren des vom Werkstück reflektierten Beleuchtungslichtstrahls; und einer Führungsoptik zum zumindest teilweise koaxialen Führen des emittierten Beleuchtungslichtstrahls durch die Austrittsöffnung und des vom Werkstück durch die Austrittsöffnung reflektierten Beleuchtungslichtstrahls zur dritten Schnittstelle. Dabei weist die Führungsoptik auf: einen polarisierenden Strahlteiler zum Führen zumindest eines Teils des emittierten linear polarisierten Beleuchtungslichtstrahls in Richtung der Austrittsöffnung; und eine zwischen dem polarisierenden Strahlteiler und der Austrittsöffnung angeordnete Verzögerungsplatte zum Umwandeln zumindest eines Teils des emittierten linear polarisierten Beleuchtungslichtstrahls in einen zirkular polarisierten Beleuchtungslichtstrahl und zum Umwandeln zumindest eines Teils des vom Werkstück reflektierten zirkular polarisierten Beleuchtungslichtstrahls in einen linear polarisierten Beleuchtungslichtstrahl.

Die Führungsoptik bewirkt aufgrund der Kombination des polarisierenden Strahlteilers und der Verzögerungsplatte, dass die Polarisation des von der Beleuchtungslichtquelle emittierten Beleuchtungslichtes vorteilhaft eingesetzt werden kann. So können im Betrieb des Bearbeitungskopfes bis zu 100% des ausgesendeten Beleuchtungslichtes, d.h. 4-mal mehr als mit einem 50:50-Strahlteiler, in Richtung der Austrittsöffnung geführt und schließlich für die Detektion und damit für die Überwachung des Bearbeitungsprozesses genutzt werden. Es wird also die Beleuchtungslichtausbeute für die Überwachung des Prozesses optimiert. Ein weiterer Vorteil ist, dass störende Reflektionen reduziert werden. Denn durch Reflektionen des emittierten linear polarisierten Beleuchtungslichtes zwischen Beleuchtungslichtquelle und Verzögerungsplatte wird die lineare Polarisation des emittierten Beleuchtungslichtes nicht geändert. Bei eventuell auftretenden unerwünschten Reflektionen wird das Beleuchtungslicht von dem polarisierenden Strahlteiler allenfalls zur Beleuchtungslichtquelle zurückgeleitet und stören die Detektoraufnahmen nicht. Zusätzlich werden in der Führungsoptik Interferenzen des emittierten und reflektierten Beleuchtungslichts vermieden. Außerdem können kommerziell gut erhältliche, bewährte und kostengünstige optische Elemente eingesetzt werden.

Der polarisierende Strahlteiler und die Verzögerungsplatte können jeweils selektiv für einen Wellenlängenbereich sein, insbesondere für einen Wellenlängenbereich des Beleuchtungslichtstrahls, insbesondere für einen Wellenlängenbereich um die Wellenlänge des Beleuchtungslichtstrahls. Auf diese Weise wird die Beleuchtungslichtausbeute an der Detektoreinrichtung erhöht.

Der polarisierende Strahlteiler kann zum Umlenken und/oder Reflektieren von mehr als 90%, bevorzugt zwischen 90% und 100%, bevorzugter zwischen 95% und 99%, des linear polarisieren Beleuchtungslichtstrahls in Richtung der Verzögerungsplatte ausgebildet und/oder ausgerichtet sein. Der polarisierende Strahlteiler kann ferner zum Transmittieren zumindest eines Teils, insbesondere von mehr als 80%, bevorzugt zwischen 80 % und 100%, bevorzugter zwischen 90% und 99%, des vom Werkstück reflektierten Beleuchtungslichts ausgebildet und/oder ausgerichtet sein, insbesondere zum Transmittieren in Richtung der dritten Schnittstelle. Dies erlaubt eine Anordnung der optischen Elemente der Führungsoptik auf kleinem Raum, da der polarisierende Strahlteiler das Beleuchtungslicht sowohl in Richtung der Austrittsöffnung umlenken, als auch das reflektierte Beleuchtungslicht in Richtung der dritten Schnittstelle transmittieren kann.

Die Verzögerungsplatte kann als eine lambda/4-Platte ausgebildet sein. Die Verzögerungsplatte kann außerdem zum Umwandeln des emittierten linear polarisierten Beleuchtungslichtstrahls, insbesondere von mehr als 90%, bevorzugt zwischen 90% und 100%, bevorzugter zwischen 95% und 99%, des emittierten linear polarisierten Beleuchtungslichtstrahls, in einen zirkular polarisierten Beleuchtungslichtstrahl ausgebildet und/oder ausgerichtet sein. Die Verzögerungsplatte kann des Weiteren zum Umwandeln des zirkular polarisierten, vom Werkstück reflektierten Beleuchtungslichtstrahls, insbesondere von mehr als 90%, bevorzugt zwischen 90% und 100%, bevorzugter zwischen 95% und 99%, des zirkular polarisierten, vom Werkstück reflektierten Beleuchtungslichtstrahls, in einen linear polarisierten Beleuchtungslichtstrahl ausgebildet und/oder ausgerichtet sein. Insbesondere kann die Verzögerungsplatte zum Umwandeln des reflektierten Beleuchtungslichtstrahls in einen linear polarisierten Beleuchtungslichtstrahl, dessen Polarisationsebene senkrecht zur Polarisationsebene des emittierten linear polarisierten Beleuchtungslichtstrahls ist, ausgebildet sein. Mit diesen Ausführungen der Verzögerungsplatte ist es möglich, Interferenzen des emittierten und reflektierten Beleuchtungslichts zu minimieren oder auszuschließen.

Die erste Schnittstelle kann mit einer Bearbeitungslaserquelle zum Emittieren eines Bearbeitungslaserstrahls verbunden oder versehen sein.

Die zweite Schnittstelle kann mit einer Beleuchtungslichtquelle zum Emittieren eines linear polarisierten Beleuchtungslichtstrahls verbunden oder versehen sein. Dabei können die Ausrichtungen der Beleuchtungslichtquelle, des polarisierenden Strahlteilers und/oder der Verzögerungsplatte, insbesondere ihre jeweilige rotatorische Ausrichtung in Bezug auf die zentrale Achse des Strahlengangs des Beleuchtungslichtstrahls, aufeinander abgestimmt sein. Die Abstimmung kann insbesondere relativ zur Polarisationsebene des emittierten linear polarisierten Beleuchtungslichtstrahls vorgenommen sein/werden. Damit kann die Umlenkung des emittierten Beleuchtungslichtstrahls an dem polarisierenden Strahlteiler und/oder die Umwandlung des emittierten Beleuchtungslichtstrahls an der Verzögerungsplatte optimiert werden. Mindesten ein Element ausgewählt aus der zweiten Schnittstelle, der Beleuchtungslichtquelle, dem polarisierenden Strahlteiler und der Verzögerungsplatte kann rotatorisch justierbar und/oder rotierbar ausgebildet sein, insbesondere in Bezug auf die zentrale Achse des Strahlengangs des Beleuchtungslichtstrahls. Beispielsweise ist die rotatorische Ausrichtung des polarisierenden Strahlteilers in Bezug auf die zentrale Achse des Strahlengangs des Beleuchtungslichtstrahls vorgegeben und die rotatorischen Ausrichtungen der Beleuchtungslichtquelle und der Verzögerungsplatte sind oder werden in Bezug auf die zentrale Achse des Strahlengangs des Beleuchtungslichtstrahls derart gewählt oder eingestellt, dass der Beleuchtungslichtstrahl am polarisierenden Strahlteiler zumindest teilweise in Richtung der Verzögerungsplatte umgelenkt wird und von der Verzögerungsplatte zumindest teilweise in einen zirkular polarisierten Beleuchtungslichtstrahl umgewandelt wird.

Ferner kann die dritte Schnittstelle mit einer Detektoreinrichtung zum Detektieren des vom Werkstück durch die Austrittsöffnung reflektierten Beleuchtungslichtstrahls verbunden oder versehen sein, insbesondere zum Detektieren des von der Verzögerungsplatte linear polarisierten Beleuchtungslichts.

Die Verzögerungsplatte kann das der Austrittsöffnung nächstgelegene optische Element der Führungsoptik sein. Des Weiteren kann die Führungsoptik mindestens ein optisches Element zum Kollimieren und/oder Fokussieren des Beleuchtungslichtstrahls aufweisen. Zudem kann die Führungsoptik mindestens eine Blende zwischen Austrittsöffnung und dritter Schnittstelle enthalten. Es kann ferner eine Bearbeitungslaseroptik vorgesehen sein, insbesondere eine zwischen Führungsoptik und Austrittsöffnung angeordnete Bearbeitungslaseroptik. Des Weiteren können die Führungsoptik und die Bearbeitungslaseroptik zum koaxialen Führen des Beleuchtungslaserstrahls und des Bearbeitungslaserstrahls durch die Austrittsöffnung ausgebildet sein.

Die Austrittsöffnung und die dritte Schnittstelle für die Detektoreinrichtung können koaxial angeordnet sein, insbesondere koaxial in Bezug auf die Richtung der Einstrahlung des Bearbeitungslaserstrahls auf das Werkstück. Auch kann die Austrittsöffnung kreisförmig und/oder mit einen Durchmesser von 0,8 bis 6 mm ausgebildet sein.

Eine weitere Ausführungsform betrifft eine Bearbeitungsvorrichtung zur Laserbearbeitung eines Werkstücks, mit einem Bearbeitungskopf nach einer der vorstehenden Ausführungsformen.

In einer anderen Ausführungsform wird eine Verwendung eines Bearbeitungskopfes nach einer der vorstehenden Ausführungsformen oder einer Bearbeitungsvorrichtung nach der vorstehenden Ausführungsform zur Laserbearbeitung eines Werkstücks, insbesondere zum Laserschneiden, bereitgestellt.

Eine Ausführungsform betrifft ein Verfahren zur Laserbearbeitung eines Werkstücks, insbesondere zum Laserschneiden, insbesondere mit einem Bearbeitungskopf oder einer Bearbeitungsvorrichtung nach einer der vorstehenden Ausführungsformen, mit den Schritten: Emittieren eines Bearbeitungslaserstrahls aus einer Bearbeitungslaserquelle an einer ersten Schnittstelle eines Bearbeitungskopfes und Bestrahlen eines Werkstücks, insbesondere einer Bearbeitungszone des Werkstücks, mit dem Bearbeitungslaserstrahl durch eine Austrittsöffnung des Bearbeitungskopfes; Emittieren eines linear polarisierten Beleuchtungslichtstrahls aus einer Beleuchtungslichtquelle an einer zweiten Schnittstelle des Bearbeitungskopfes; Führen des emittierten Beleuchtungslichtstrahls mittels einer Führungsoptik des Bearbeitungskopfes durch die Austrittsöffnung und Beleuchten des Werkstücks, insbesondere Beleuchten der Bearbeitungszone, und Führen des von dem Werkstück durch die Austrittsöffnung reflektierten Beleuchtungslichtstrahls mittels der Führungsoptik zu einer Detektoreinrichtung an einer dritten Schnittstelle des Bearbeitungskopfes, wobei der emittierte und der reflektierte Beleuchtungslichtstrahl zumindest teilweise koaxial geführt werden; wobei die Führungsoptik einen polarisierenden Strahlteiler und eine zwischen dem polarisierenden Strahlteiler und der Austrittsöffnung angeordnete Verzögerungsplatte aufweist; mittels dem polarisierenden Strahlteiler zumindest ein Teil des emittierten linear polarisierten Beleuchtungslichtstrahls in Richtung der Austrittsöffnung, insbesondere in Richtung der Verzögerungsplatte, geführt wird; und mittels der Verzögerungsplatte zumindest ein Teil des emittierten linear polarisierten Beleuchtungslichtstrahls in einen zirkular polarisierten Beleuchtungslichtstrahl und zumindest ein Teil des vom Werkstück reflektierten zirkular polarisierten Beleuchtungslichtstrahls in einen linear polarisierten Beleuchtungslichtstrahl umgewandelt werden.

Bei dem Verfahren kann der polarisierende Strahlteiler und die Verzögerungsplatte jeweils selektiv für einen Wellenlängenbereich gewählt oder eingestellt werden oder sein, insbesondere für einen Wellenlängenbereich des Beleuchtungslichtstrahls, insbesondere für einen Wellenlängenbereich um die Wellenlänge des Beleuchtungslichtstrahls.

Ferner kann bei dem Verfahren der polarisierende Strahlteiler mehr als 90%, bevorzugt zwischen 90% und 100%, bevorzugter zwischen 95% und 99%, des linear polarisieren Beleuchtungslichtstrahls in Richtung der Verzögerungsplatte umlenken und/oder reflektieren. Zudem kann der polarisierende Strahlteiler zumindest einen Teil, insbesondere mehr als 80%, bevorzugt zwischen 80 % und 100%, bevorzugter zwischen 90% und 99%, des vom Werkstück reflektierten Beleuchtungslichts, transmittieren, insbesondere in Richtung der dritten Schnittstelle. Des Weiteren kann der polarisierende Strahlteiler zum Umlenken und/oder Reflektieren des emittierten linear polarisieren Beleuchtungslichtstrahls in Richtung der Verzögerungsplatte ausgerichtet werden/sein. Alternativ oder zusätzlich kann die Beleuchtungslichtquelle ausgerichtet werden/sein zum Umlenken und/oder Reflektieren des linear polarisieren Beleuchtungslichtstrahls mittels des polarisierenden Strahlteilers in Richtung der Verzögerungsplatte. Ferner kann der polarisierende Strahlteiler zum Transmittieren des vom Werkstück reflektierten Beleuchtungslichts durch den polarisierenden Strahlteiler ausgerichtet werden/sein.

In dem Verfahren kann als die Verzögerungsplatte eine lambda/4-Platte gewählt werden/sein. Außerdem kann durch die Verzögerungsplatte mehr als 90%, bevorzugt zwischen 90% und 100%, bevorzugter zwischen 95% und 99%, des emittierten linear polarisierten Beleuchtungslichtstrahls in einen zirkular polarisierten Beleuchtungslichtstrahl umgewandelt werden. Insbesondere kann die Verzögerungsplatte zum Umwandeln von mehr als 90% des emittierten linear polarisierten Beleuchtungslichtstrahls in einen zirkular polarisierten Beleuchtungslichtstrahl ausgerichtet werden/sein. Außerdem kann durch die Verzögerungsplatte mehr als 90%, bevorzugt zwischen 90% und 100%, bevorzugter zwischen 95% und 99%, des zirkular polarisierten, vom Werkstück reflektierten Beleuchtungslichtstrahls in einen linear polarisierten Beleuchtungslichtstrahl umgewandelt werden, insbesondere in einen linear polarisierten Beleuchtungslichtstrahl, dessen Polarisationsebene senkrecht zur Polarisationsebene des emittierten linear polarisierten Beleuchtungslichtstrahls ist. Dabei kann die Verzögerungsplatte zum Umwandeln von mehr als 90% des zirkular polarisierten, vom Werkstück reflektierten Beleuchtungslichtstrahls in einen linear polarisierten Beleuchtungslichtstrahl ausgerichtet werden/sein.

Das Verfahren kann ferner umfassen: Bearbeiten des Werkstücks mit dem Bearbeitungslaserstrahl; und/oder Detektieren zumindest eines Teils des von dem Werkstück durch die Austrittsöffnung reflektierten Beleuchtungslichtstrahls mit der Detektoreinrichtung, insbesondere zumindest eines Teils des mit der Verzögerungsplatte in einen linear polarisierten Beleuchtungslichtstrahl umgewandelten, vom Werkstück reflektierten zirkular polarisierten Beleuchtungslichtstrahls.

Mit den Vorrichtungen zur Laserbearbeitung eines Werkstücks der vorstehenden Ausführungsformen können die gleichen Vorteile und Funktionen realisiert werden, wie mit den Ausführungsformen des Verfahrens zur Laserbearbeitung eines Werkstücks, insbesondere mit gleichlautenden und/oder analogen Merkmalen.

Weitere Merkmale und Zweckmäßigkeiten ergeben sich aus der folgenden Beschreibung von Ausführungsbeispielen, den Figuren und den Unteransprüchen. Die vorstehend genannten und die nachstehend erläuterten Merkmale können nicht nur in den angegebenen Kombinationen, sondern auch in anderen Kombinationen oder in Alleinstellung einsetzbar sein, ohne den Rahmen der vorliegenden Erfindung zu verlassen.

Nachfolgend wird die Erfindung anhand von Ausführungsbeispielen unter Bezugnahme auf die beigefügten Zeichnungen, die ebenfalls erfindungswesentliche Merkmale offenbaren, näher erläutert. Diese Ausführungsbeispiele dienen lediglich der Veranschaulichung und sind nicht als einschränkend auszulegen. Beispielsweise ist eine Beschreibung eines Ausführungsbeispiels mit einer Vielzahl von Elementen oder Komponenten nicht dahingehend auszulegen, dass alle diese Elemente oder Komponenten zur Implementierung notwendig sind. Vielmehr können andere Ausführungsbeispiele auch alternative Elemente und Komponenten, weniger Elemente oder Komponenten oder zusätzliche Elemente oder Komponenten enthalten. Elemente oder Komponenten verschiedener Ausführungsbespiele können miteinander kombiniert werden, sofern nichts anderes angegeben ist. Modifikationen und Abwandlungen, welche für eines der Ausführungsbeispiele beschrieben werden, können auch auf andere Ausführungsbeispiele anwendbar sein. Zur Vermeidung von Wiederholungen werden gleiche oder einander entsprechende Elemente in verschiedenen Figuren mit gleichen Bezugszeichen bezeichnet und nicht mehrmals erläutert. Von den Figuren zeigen:
- Fig. 1: schematisch einen beispielhaften bekannten Laserschneidkopf 10;
- Fig. 2: schematisch den Laserschneidkopf 10 im Betrieb der Beleuchtungslichtquelle;
- Fig. 3: eine exemplarische Kameraaufnahme eines Schnittspalts mit störenden Reflektionen, die mit einem dem Laserschneidkopf 10 strukturell entsprechenden Bearbeitungskopf erhalten wurde;
- Fig. 4a: schematisch einen Bearbeitungskopf 100 zur Laserbearbeitung eines Werkstücks;
- Fig. 4b: schematisch einen Bearbeitungskopf 100 zur Laserbearbeitung eines Werkstücks im Betrieb der Beleuchtungslichtquelle;
- Fig. 5: schematisch den Bearbeitungskopf 100 mit einer Bearbeitungslaserquelle 120, einem dichroitischen Spiegel 122, einer Beleuchtungslichtquelle 118 und einer Detektoreinrichtung 114 im Betrieb der Beleuchtungslichtquelle und der Bearbeitungslaserquelle; und
- Fig. 6a,b: schematisch den Bearbeitungskopf 100 im Betrieb der Beleuchtungslichtquelle.

Im Folgenden gilt für die Beschreibung von Wertebereichen, dass die Angabe eines breiten Bereichs mit engeren alternativen oder bevorzugten Bereichen auch Bereiche offenbart, die durch eine beliebige Kombination angegebener unterer Bereichsgrenzen mit angegebenen oberen Bereichsgrenzen gebildet werden können. Mit dem Begriff "emittiertes" Beleuchtungslicht oder "emittierter" Beleuchtungslichtstrahl und Abwandlungen davon ist das Beleuchtungslicht bzw. der Beleuchtungslichtstrahl nach dem Emittieren aus der Beleuchtungslichtquelle auf dem gesamten Weg zum Werkstück gemeint. Mit dem Begriff "reflektiertes" Beleuchtungslicht oder "reflektierter" Beleuchtungslichtstrahl und Abwandlungen davon ist das Beleuchtungslicht bzw. der Beleuchtungslichtstrahl nach Reflektion am Werkstück auf dem gesamten Weg zur dritten Schnittstelle bzw. zur Detektoreinrichtung gemeint.

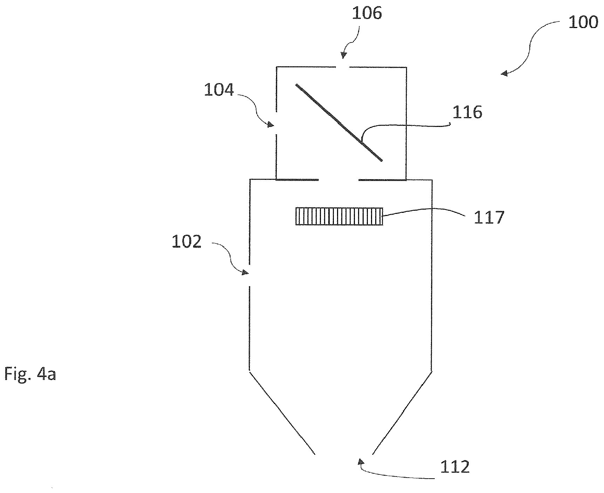

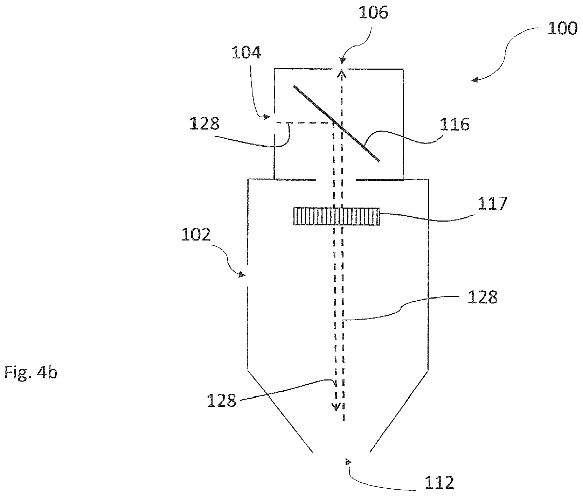

Fig. 4a und 4b zeigen als ein Ausführungsbeispiel der Erfindung einen Bearbeitungskopf 100 zur Laserbearbeitung eines Werkstücks. Der Bearbeitungskopf ist mit einer ersten Schnittstelle 102 für eine Bearbeitungslaserquelle zum Emittieren eines Bearbeitungslaserstrahls (nicht gezeigt); einer zweiten Schnittstelle 104 für eine Beleuchtungslichtquelle zum Emittieren eines linear polarisierten Beleuchtungslichtstrahls 128; einer Austrittsöffnung 112 für den Bearbeitungslaserstrahl und den Beleuchtungslichtstrahl; einer dritten Schnittstelle 106 für eine Detektoreinrichtung zum Detektieren des vom Werkstück reflektierten Beleuchtungslichtstrahls; und einer Führungsoptik 116 , 117 zum zumindest teilweise koaxialen Führen des emittierten Beleuchtungslichtstrahls durch die Austrittsöffnung und des vom Werkstück durch die Austrittsöffnung reflektierten Beleuchtungslichtstrahls zur dritten Schnittstelle versehen. Der im Betrieb erzeugte Beleuchtungslichtstrahl 128 ist in Fig. 4b mit einer gestrichelten Linie veranschaulicht. Die Führungsoptik weist Folgendes auf: einen polarisierenden Strahlteiler 116 zum Führen zumindest eines Teils des emittierten linear polarisierten Beleuchtungslichtstrahls in Richtung der Austrittsöffnung; 112 und eine zwischen dem polarisierenden Strahlteiler 116 und der Austrittsöffnung 112 angeordnete Verzögerungsplatte 117 zum Umwandeln zumindest eines Teils des emittierten linear polarisierten Beleuchtungslichtstrahls in einen zirkular polarisierten Beleuchtungslichtstrahl und zum Umwandeln zumindest eines Teils des vom Werkstück reflektierten zirkular polarisierten Beleuchtungslichtstrahls in einen linear polarisierten Beleuchtungslichtstrahl.

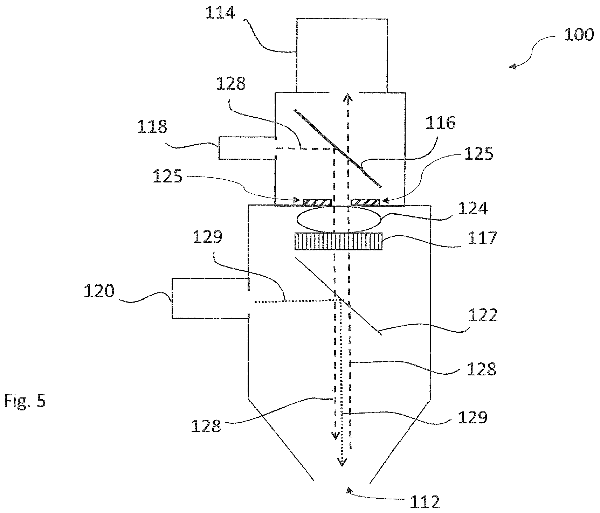

Fig. 5 stellt den Bearbeitungskopf 100 mit einer an der ersten Schnittstelle 102 vorgesehenen Bearbeitungslaserquelle 120, einem dichroitischen Spiegel 122 zum Umlenken des Bearbeitungslaserstrahls 129, einer an der zweiten Schnittstelle 104 angebrachten Beleuchtungslichtquelle 118 und einer an der dritten Schnittstelle 106 angebrachten Kamera 114 als Detektoreinrichtung dar. Im vorliegenden Beispiel wird eine monochromatische CMOS-Kamera eingesetzt, die für einen Wellenlängenbereich von 400 bis 800 nm empfindlich ist. Vor der Kamera 114. d.h. an der dritten Schnittstelle 106, ist ein schmalbandiger Filter mit einer Durchlassfilterung um die zentrale Beleuchtungswellenlänge vorgesehen. Zudem ist eine Linse 124 für den Beleuchtungslichtstrahl als optionales optisches Element, z.B. eine Fokussierlinse oder eine Kollimationslinse, eingezeichnet. Ein weiteres optionales Element kann eine Blende 125 sein. Zum Beispiel kann die Blende 125 angeordnet sein oberhalb der Linse 124, wie in Fig. 5 eingezeichnet, oder bei der dritten Schnittstelle 106. Eine Blende (Verengung) kann vorteilhaft sein in Bezug auf die Tiefenschärfe der Kameraaufnahmen.

In einem alternativen Beispiel kann an der zweiten Schnittstelle 104 die Kamera 114 und an der dritten Schnittstelle 106 die Beleuchtungslichtquelle 118 vorgesehen sein, d.h. die Kamera 114 und die Beleuchtungslichtquelle 118 sind im Vergleich zum Beispiel der Fig. 5 vertauscht. In diesem Fall ist der polarisierende Strahlteiler 116 so ausgerichtet, dass er für den aus der Quelle 118 emittierten Beleuchtungslichtstrahl 128 transmissiv und für den am Werkstück 24 reflektierten Beleuchtungslichtstrahl 128 reflektiv ist. Der polarisierende Strahlteiler lässt so den emittierten Beleuchtungslichtstrahl 128 in Richtung der Austrittsöffnung 112 zumindest teilweise passieren und lenkt den am Werkstück 24 reflektierten Beleuchtungslichtstrahl 128 zumindest teilweise zur Kamera 114 um.

Zur Bearbeitung des Werkstücks werden im Beispiel der Fig. 5 die Bearbeitungslaserquelle 120 und die Beleuchtungslichtquelle 118 in Betrieb genommen und der Bearbeitungslaserstrahl 129 (in Fig. 5 mit einer gestrichelten Linie gezeigt) und der Beleuchtungslichtstrahl 128 werden seitlich in den Bearbeitungskopf 100 geführt. Mittels dem polarisierenden Strahlteiler 116 bzw. mittels dem dichroitischen Spiegel 122, der für den Beleuchtungslichtstrahl durchlässig ist, werden der emittierte Beleuchtungslichtstrahl 128 und der Bearbeitungslaserstrahl umgelenkt und koaxial zur Austrittsöffnung 112 geleitet. Der durch die Austrittsöffnung 112 vom Werkstück reflektierte Beleuchtungslichtstrahl wird koaxial mit dem Bearbeitungslaserstrahl und dem Beleuchtungslichtstrahl zur Kamera 114 geführt.

Wird der Bearbeitungskopf 100 beispielsweise bei einem Schneidprozess eingesetzt, ist für optimale Kamera-Aufnahmebedingungen während des Schneidprozesses eine schmalbandige Beleuchtung bei gleichzeitiger Filterung der detektierten Wellenlänge günstig. Damit ist besonders hinsichtlich der Schnittspaltgeometrie ein hoher Informationsgehalt zu gewinnen. Durch die Platzierung der Beleuchtungslichtquelle und Führung des Beleuchtungslichts kann erreicht werden, dass durch die Austrittsöffnung 112 hindurch beleuchtet werden kann. Für eine gute Ausleuchtung der Prozesszone und eine möglichst hohe Beleuchtungslichtausbeute ist außerdem eine parallele Strahlausbreitung des Beleuchtungslichts günstig, was mit einer Kollimationslinse als das optische Element 124 erreicht werden kann. Das optische Element 124 kann alternativ eine Fokussierlinse sein, die einstellbar ist und eingesetzt werden kann, um die Kamera auf die Prozesszone scharf auszurichten. Wenn die Beleuchtungslichtquelle 118 und die Kamera 114 wie im Beispiel der Fig. 5 in etwa gleich weit von der Prozesszone entfernt sind, kann für beide eine ähnliche Fokussierung mittels der Fokussierlinse 124 vorteilhaft erreicht werden.

Die Bearbeitungslaserquelle 120 besitzt im vorliegenden Beispiel eine Leistung von ungefähr 12 kW und erzeugt den Bearbeitungslaserstrahl mit einer zentralen Wellenlänge von ca. 1070 nm. Als Beleuchtungslichtquelle 118 wird eine schmalbandige und räumlich gerichtete Lichtquelle verwendet, im vorliegenden Beispiel ein Diodenlaser, auch Laserdiode genannt. Dieser sendet linear polarisiertes Licht aus. Die Beleuchtungslichtquelle 118 wird im vorliegenden Beispiel mit einer Leistung von ungefähr 1000 mW betrieben und erzeugt den Beleuchtungslaserstrahl 128 mit einer zentralen Wellenlänge von ca. 638 nm, mit einem Wellenlängenband von 6 nm. Alternativ können Beleuchtungslichtquellen eingesetzt werden, die einen linear polarisierten Laserstrahl in einem Wellenlängenbereich von 400 bis 1000 nm erzeugen. Die Leistung der Beleuchtungslichtquelle kann einstellbar sein. Je nach Leistung der Bearbeitungslaserquelle und/oder der Beschaffenheit des Werkstücks können unterschiedliche Beleuchtungsleistungen vorteilhaft sein. Beispielsweise kann die Beleuchtungslichtquelle zwischen ca. 100 und 2000 mW einstellbar sein. In weiteren Alternativen können auch Lichtquellen mit einem nachgeschalteten Polarisator genutzt werden. Im vorliegenden Beispiel ist die Polarisationsrichtung des vom Diodenlaser ausgesendeten Beleuchtungslichtstrahls 128 die s-Polarisation.

Der polarisierende Strahlteiler 116 ist aus einem dielektrischen Material gebildet und handelsüblich. Erlässt in einer Ebene (in Lichtausbreitung stehend) linear polarisiertes Licht durch und in der orthogonal dazu stehenden Ebene (in Lichtausbreitung stehend) reflektiert er das Licht. Diese Funktionsweise ist wellenlängenselektiv. Vorliegend ist der polarisierende Strahlteiler 116 so gewählt, dass er die beschriebene Funktionsweise im durch den Diodenlaser spezifizierten Wellenlängenbereich besitzt. Der Strahlteiler 116 ist derart eingebaut und in Bezug auf die zentrale Achse des Strahlengangs des Beleuchtungslichtstrahls 128 und relativ zur Polarisationsebene des Beleuchtungslichtstrahls 128 rotatorisch ausgerichtet, dass ungefähr 100% des emittierten s-polarisierten Beleuchtungslichtes beim Strahlteiler in Richtung der Austrittsöffnung 112 reflektiert werden.

Als die zwischen dem polarisierenden Strahlteiler 116 und der Austrittsöffnung 112 angeordnete Verzögerungsplatte 117 ist für das vorliegende Beispiel eine lambda/4-Platte aus doppelbrechenden kristallinen Quarz vorgesehen. Im vorliegenden Beispiel ist die lambda/4-Platte 117 ferner das der Austrittsöffnung 112 nächstgelegene optische Element der Führungsoptik. Die lambda/4-Platte 117 ist auf diese Weise hinter optionalen weiteren abbildenden Optiken der Führungsoptik, wie z.B. die in Fig. 5 eingezeichnete Linse 124, und hinter Grenzflächen der Führungsoptik eingebaut. Die lambda/4-Platte ist derart eingebaut, dass das die lambda/4-Platte durchlaufende emittierte s-polarisierte Beleuchtungslicht in zirkular polarisiertes Beleuchtungslicht umgewandelt wird.

Die lambda/4-Platte gehört zur Bauteilegruppe der optischen Verzögerungs- oder Wellenplatten. Generell können solche optischen Bauelemente die Polarisation und Phase durchtretender elektromagnetischer Wellen, insbesondere von Licht ändern. Dabei wird ausgenutzt, dass sich Licht in doppelbrechendem passend orientiertem Material je nach Lage der Polarisationsebene mit unterschiedlicher Wellenlänge fortpflanzt.

Im vorliegenden Beispiel ist die lambda/4-Platte 117 derart gewählt und angeordnet, dass die lineare Polarisation des auftreffenden emittierten s-polarisierten Beleuchtungslichtstrahls 128 in eine links-zirkulare Polarisation umgewandelt wird. Die lambda/4-Platte 117 ist in Bezug auf die zentrale Achse des Strahlengangs des Beleuchtungslichtstrahls 128 und relativ zu der Polarisationsebene des auftreffenden emittierten Beleuchtungslichtstrahls rotatorisch so ausgerichtet, dass ungefähr 100% des linear s-polarisierten Beleuchtungslichtes transmittiert und in links-zirkular polarisiertes Beleuchtungslicht umgewandelt wird. Die Funktionsweise der lambda/4-Platte ist wellenlängenselektiv. Im vorliegenden Beispiel ist die lambda-Platte 116 auf den durch den Diodenlaser spezifizierten Wellenlängenbereich abgestimmt.

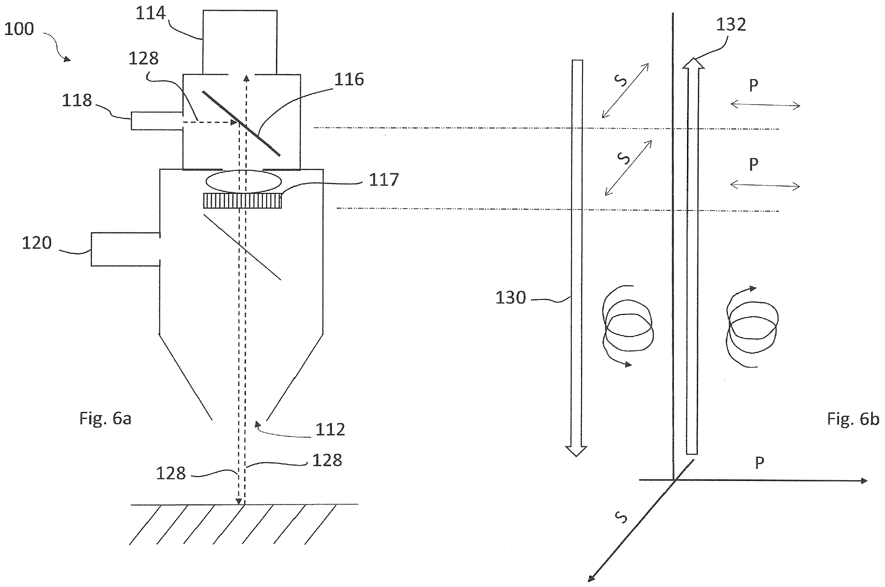

Wie Fig. 6a und 6b schematisch veranschaulichen, wird im Betrieb des Bearbeitungskopfes 100 der von der Beleuchtungslichtquelle 118 emittierte s-polarisierte Beleuchtungslichtstrahl 128 am polarisierenden Strahlteiler 116 zu ungefähr 100% in Richtung der lambda/4-Platte 117 und der Austrittsöffnung 112 reflektiert und umgelenkt. Die lambda/4-Platte 117 wandelt die s-Polarisation des Beleuchtungslichtstrahls 128 zu ungefähr 100% in eine zirkulare Polarisation um, im vorliegenden Beispiel in eine links-zirkulare Polarisation. Der links-zirkular polarisierte Beleuchtungslichtstrahl 128 propagiert weiter durch die Austrittsöffnung 112 zum Werkstück 24. Dort wird der Beleuchtungslichtstrahl 128 reflektiert, wobei eine zirkulare Polarisation erhalten bleibt, lediglich die Richtung der links-zirkularen Polarisation wird in rechts-zirkular geändert.

Die lambda/4-Platte 117 ist derart ausgebildet und ausgerichtet, dass transmittiertes rechts-zirkular polarisiertes Beleuchtungslicht zu ungefähr 100% in p-polarisiertes Licht umgewandelt wird. Ferner ist der Strahlteiler 116 derart ausgebildet und ausgerichtet, dass auftreffendes p-polarisiertes Beleuchtungslicht zu mindestens 80% transmittiert werden.

Auf dem Rückweg durchläuft der vom Werkstück 24 reflektierte Beleuchtungslichtstrahl 128 erneut die lambda/4-Platte 117, wobei dessen rechts-zirkulare Polarisation in eine lineare Polarisation gewandelt wird. Nun steht die Polarisationsebene des linear polarisierten Beleuchtungslichtstrahls 128 senkrecht zur Polarisationsebene des emittierten linear polarisierten Beleuchtungsstrahls 128. Die lineare Polarisation des emittierten Beleuchtungslichtstrahls 128 in Ausbreitungsrichtung vor der lambda/4-Platte 117 ist im vorliegenden Beispiel eine s-Polarisation. Entsprechend ist die dazu orthogonale (senkrechte) lineare Polarisation die p-Polarisation. Der vom Werkstück reflektierte und durch die lambda/4-Platte transmittierte Beleuchtungslichtstrahl 128 ist somit p-polarisiert. Für den p-polarisierten Beleuchtungslichtstrahl 128 ist der polarisierende Strahlteiler 116 zu mindestens 80% transparent.

Zur Veranschaulichung zeigt Fig. 6b schematisch, wie sich die Polarisationszustände entlang des Strahlenganges des Beleuchtungslichtstrahls 128 ändern. Mit dem Pfeil 130 ist die Propagationsrichtung des Beleuchtungslichtstrahls 128 zum Werkstück 24 dargestellt. Der Pfeil 132 entspricht der Propagationsrichtung des vom Werkstück reflektierten Beleuchtungslichtstrahls 128 zur Kamera 114. In Propagationsrichtung 130 ist zwischen der Beleuchtungslichtquelle 118 und der lambda/4-Platte 117 der Beleuchtungslichtstrahl 128 s-polarisiert. Nach Durchlaufen der lambda/4-Platte 117 ist der Beleuchtungslichtstrahl 128 in Propagationsrichtung 130 links-zirkular polarisiert. Nach Reflektion am Werkstück 24 ist der Beleuchtungslichtstrahl 128 in Propagationsrichtung 132 rechts-zirkular polarisiert. Nach Durchlaufen der lambda/4-Platte 117 ist der Beleuchtungslichtstrahl 128 p-polarisiert, passiert in Propagationsrichtung 132 den polarisierenden Strahlteiler 116 und gelangt schließlich in die Kamera 114.

Da also fast 100% des emittierten Beleuchtungslichtstrahls am polarisierenden Strahlteiler 116 umgelenkt werden, nahezu 100% des emittierten bzw. reflektierten Beleuchtungslichtstrahls von der lambda/4-Platte 117 umgewandelt werden, sowie mehr als 80% des reflektierten Beleuchtungslichtstrahls am Strahlteiler 116 zur Kamera 114 transmittiert werden, kann ein hoher Anteil, z.B. 80% bis 100%, des ursprünglich mit der Beleuchtungslichtquelle 118 erzeugten Beleuchtungslichtstrahls 128 für die Überwachung des Bearbeitungsprozesses genutzt werden. Mit dem Bearbeitungskopf 100 wird daher die Beleuchtungslichtausbeute für die Überwachung des Bearbeitungsprozesses maximiert.

Eine hohe Aussagekraft der Überwachung des Bearbeitungsprozesses wird im vorliegenden Beispiel ferner dadurch gefördert, dass die lambda/4-Platte 117 im Strahlengang des emittierten Beleuchtungslichtstrahls 128 als letztes optisches Element der Führungsoptik eingebaut ist. Somit ermöglicht die lamda/4-Platte 117 im Zusammenwirken mit dem polarisierenden Strahlteiler 116, dass störende Reflektionen von optischen Grenzflächen des emittierten s-polarisierten Beleuchtungslichtstrahls in Richtung Kamera 114 vermieden werden. Sollten zwischen Beleuchtungslichtquelle 118 und lambda/4-Platte 117 störende Reflektionen des Beleuchtungslichtstrahls 128 entstehen, wird dessen Polarisation nicht geändert. Reflektionen des s-polarisierten Beleuchtungslichts werden aber von dem polarisierenden Strahlteiler 116 nicht transmittiert, sondern reflektiert und gelangen somit nicht zur Kamera 114.

Zusätzlich werden aufgrund der Führungsoptik mit dem polarisierenden Strahlteiler 116 und der lambda/4-Platte 117 Interferenzen des emittierten und reflektierten Beleuchtungslichts vermieden. Da die Polarisation des Beleuchtungslichtstahls 128 in Propagationsrichtung 130 und in Propagationsrichtung 132 verschieden ist (s- bzw. p-Polarisation sowie rechts/links-zirkular), interferieren diesen Strahlen nur minimal bzw. eine Interferenz wird vermieden.

### Bezugszeichenliste

- 10: Laserschneidkopf
- 12: Austrittsöffnung
- 14: Kamera
- 16: Strahlteiler
- 18: Beleuchtungslichtquelle
- 20: Bearbeitungslaserquelle
- 22: dichroitischer Spiegel
- 24: Werkstück
- 28: Beleuchtungslichtstrahl
- 29: Reflektionsstellen
- 30: Schnittspalt
- 32: Reflektion
- 100: Bearbeitungskopf
- 102: erste Schnittstelle
- 104: zweite Schnittstelle
- 106: dritte Schnittstelle
- 112: Austrittsöffnung
- 114: Detektoreinrichtung, Kamera
- 116: polarisierender Strahlteiler
- 117: Verzögerungsplatte, lambda/4-Platte
- 118: Beleuchtungslichtquelle, Diodenlaser
- 120: Bearbeitungslaserquelle
- 122: dichroitischer Spiegel
- 124: Linse, optisches Element
- 125: Blende
- 128: Beleuchtungslichtstrahl
- 129: Bearbeitungslaserstrahl
- 130: Pfeil, Propagationsrichtung
- 132: Pfeil, Propagationsrichtung

## Patentansprüche

1. Bearbeitungskopf zur Laserbearbeitung eines Werkstücks, insbesondere zum Laserschneiden, mit
einer ersten Schnittstelle (102) für eine Bearbeitungslaserquelle zum Emittieren eines Bearbeitungslaserstrahls (129);
einer zweiten Schnittstelle (104) für eine Beleuchtungslichtquelle zum Emittieren eines linear polarisierten Beleuchtungslichtstrahls (128);
einer Austrittsöffnung (112) für den Bearbeitungslaserstrahl und den Beleuchtungslichtstrahl;
einer dritten Schnittstelle (106) für eine Detektoreinrichtung zum Detektieren des vom Werkstück reflektierten Beleuchtungslichtstrahls; und
einer Führungsoptik (116, 117) zum zumindest teilweise koaxialen Führen des emittierten Beleuchtungslichtstrahls durch die Austrittsöffnung und des vom Werkstück durch die Austrittsöffnung reflektierten Beleuchtungslichtstrahls zur dritten Schnittstelle;
**dadurch gekennzeichnet, dass** die Führungsoptik aufweist einen polarisierenden Strahlteiler (116) zum Führen zumindest eines Teils des emittierten linear polarisierten Beleuchtungslichtstrahls in Richtung der Austrittsöffnung; und
eine zwischen dem polarisierenden Strahlteiler und der Austrittsöffnung angeordnete Verzögerungsplatte (117) zum Umwandeln zumindest eines Teils des emittierten linear polarisierten Beleuchtungslichtstrahls in einen zirkular polarisierten Beleuchtungslichtstrahl und zum Umwandeln zumindest eines Teils des vom Werkstück (24) reflektierten zirkular polarisierten Beleuchtungslichtstrahls in einen linear polarisierten Beleuchtungslichtstrahl.

2. Bearbeitungskopf nach Anspruch 1, wobei der polarisierende Strahlteiler (116) und die Verzögerungsplatte (117) jeweils selektiv für einen Wellenlängenbereich sind, insbesondere für einen Wellenlängenbereich des Beleuchtungslichtstrahls, insbesondere für einen Wellenlängenbereich um die Wellenlänge des Beleuchtungslichtstrahls.

3. Bearbeitungskopf nach einem der vorstehenden Ansprüche,
wobei der polarisierende Strahlteiler (116) zum Umlenken und/oder Reflektieren von mehr als 90% des linear polarisieren Beleuchtungslichtstrahls in Richtung der Verzögerungsplatte (117) ausgebildet und/oder ausgerichtet ist; und/oder
wobei der polarisierende Strahlteiler (116) zum Transmittieren zumindest eines Teils, insbesondere von mehr als 80%, des vom Werkstück reflektierten Beleuchtungslichts ausgebildet und/oder ausgerichtet ist, insbesondere zum Transmittieren in Richtung der dritten Schnittstelle (106).

4. Bearbeitungskopf nach einem der vorstehenden Ansprüche,
wobei die Verzögerungsplatte (117) als eine lambda/4-Platte ausgebildet ist; und/oder
wobei die Verzögerungsplatte zum Umwandeln des emittierten linear polarisierten Beleuchtungslichtstrahls, insbesondere von mehr als 90% des emittierten linear polarisierten Beleuchtungslichtstrahls, in einen zirkular polarisierten Beleuchtungslichtstrahl ausgebildet und/oder ausgerichtet ist; und/oder
wobei die Verzögerungsplatte (117) zum Umwandeln des zirkular polarisierten, vom Werkstück reflektierten Beleuchtungslichtstrahls, insbesondere von mehr als 90% des zirkular polarisierten, vom Werkstück reflektierten Beleuchtungslichtstrahls, in einen linear polarisierten Beleuchtungslichtstrahl ausgebildet und/oder ausgerichtet ist; insbesondere zum Umwandeln in einen linear polarisierten Beleuchtungslichtstrahl, dessen Polarisationsebene senkrecht zur Polarisationsebene des emittierten linear polarisierten Beleuchtungslichtstrahls ist.

5. Bearbeitungskopf nach einem der vorstehenden Ansprüche,
wobei die erste Schnittstelle (102) mit einer Bearbeitungslaserquelle (120) zum Emittieren eines Bearbeitungslaserstrahls verbunden oder versehen ist; und/oder wobei die zweite Schnittstelle (104) mit einer Beleuchtungslichtquelle (118) zum Emittieren eines linear polarisierten Beleuchtungslichtstrahls verbunden oder versehen ist; und/oder
wobei die dritte Schnittstelle (106) mit einer Detektoreinrichtung (114) zum Detektieren des vom Werkstück durch die Austrittsöffnung (112) reflektierten Beleuchtungslichtstrahls verbunden oder versehen ist, insbesondere zum Detektieren des von der Verzögerungsplatte linear polarisierten Beleuchtungslichts.

6. Bearbeitungskopf nach einem der vorstehenden Ansprüche,
wobei die Verzögerungsplatte (117) das der Austrittsöffnung nächstgelegene optische Element der Führungsoptik ist; und/oder
wobei die Führungsoptik mindestens ein optisches Element (124) zum Kollimieren und/oder Fokussieren des Beleuchtungslichtstrahls aufweist..

7. Bearbeitungskopf nach Anspruch 6,
wobei eine Bearbeitungslaseroptik (122) vorgesehen ist, insbesondere eine zwischen Führungsoptik und Austrittsöffnung angeordnete Bearbeitungslaseroptik; und/oder
wobei die Führungsoptik (116, 117) und die Bearbeitungslaseroptik (122) zum koaxialen Führen des Beleuchtungslaserstrahls und des Bearbeitungslaserstrahls durch die Austrittsöffnung ausgebildet sind.

8. Bearbeitungskopf nach einem der vorstehenden Ansprüche,
wobei die Austrittsöffnung (112) und die dritte Schnittstelle (106) für die Detektoreinrichtung koaxial angeordnet sind, insbesondere koaxial in Bezug auf die Richtung der Einstrahlung des Bearbeitungslaserstrahls auf das Werkstück; und/oder
wobei die Austrittsöffnung (112) kreisförmig und/oder mit einen Durchmesser von 0,8 bis 6 mm ausgebildet ist.

9. Bearbeitungsvorrichtung zur Laserbearbeitung eines Werkstücks, mit einem Bearbeitungskopf nach einem der vorstehenden Ansprüche.

10. Verwendung eines Bearbeitungskopfes nach einem der Ansprüche 1 bis 8 oder einer Bearbeitungsvorrichtung nach Anspruch 9 zur Laserbearbeitung eines Werkstücks, insbesondere zum Laserschneiden.

11. Verfahren zur Laserbearbeitung eines Werkstücks, insbesondere zum Laserschneiden, insbesondere mit einem Bearbeitungskopf nach einem der Ansprüche 1 bis 8 oder einer Bearbeitungsvorrichtung nach Anspruch 9, mit den Schritten Emittieren eines Bearbeitungslaserstrahls (129) aus einer Bearbeitungslaserquelle (120) an einer ersten Schnittstelle (102) eines Bearbeitungskopfes (100) und Bestrahlen eines Werkstücks (24), insbesondere einer Bearbeitungszone des Werkstücks, mit dem Bearbeitungslaserstrahl durch eine Austrittsöffnung (112) des Bearbeitungskopfes;
Emittieren eines linear polarisierten Beleuchtungslichtstrahls (128) aus einer Beleuchtungslichtquelle (118) an einer zweiten Schnittstelle (104) des Bearbeitungskopfes;
Führen des emittierten Beleuchtungslichtstrahls (128) mittels einer Führungsoptik (116, 117) des Bearbeitungskopfes durch die Austrittsöffnung (112) und Beleuchten des Werkstücks, insbesondere Beleuchten der Bearbeitungszone, und Führen des von dem Werkstück durch die Austrittsöffnung (112) reflektierten Beleuchtungslichtstrahls mittels der Führungsoptik (116, 117) zu einer Detektoreinrichtung (114) an einer dritten Schnittstelle (106) des Bearbeitungskopfes, wobei der emittierte und der reflektierte Beleuchtungslichtstrahl zumindest teilweise koaxial geführt werden;
**dadurch gekennzeichnet, dass**
die Führungsoptik einen polarisierenden Strahlteiler (116) und eine zwischen dem polarisierenden Strahlteiler und der Austrittsöffnung angeordnete Verzögerungsplatte (117) aufweist;
mittels dem polarisierenden Strahlteiler (116) zumindest ein Teil des emittierten linear polarisierten Beleuchtungslichtstrahls in Richtung der Austrittsöffnung (112), insbesondere in Richtung der Verzögerungsplatte, geführt wird; und
mittels der Verzögerungsplatte (117) zumindest ein Teil des emittierten linear polarisierten Beleuchtungslichtstrahls (128) in einen zirkular polarisierten Beleuchtungslichtstrahl und zumindest ein Teil des vom Werkstück reflektierten zirkular polarisierten Beleuchtungslichtstrahls in einen linear polarisierten Beleuchtungslichtstrahl umgewandelt werden.

12. Verfahren nach Anspruch 11, wobei der polarisierende Strahlteiler (116) und die Verzögerungsplatte (117) jeweils selektiv für einen Wellenlängenbereich gewählt oder eingestellt werden oder sind, insbesondere für einen Wellenlängenbereich des Beleuchtungslichtstrahls, insbesondere für einen Wellenlängenbereich um die Wellenlänge des Beleuchtungslichtstrahls.

13. Verfahren nach einem der Ansprüche 11 und 12,
wobei der polarisierende Strahlteiler (116) mehr als 90% des linear polarisieren Beleuchtungslichtstrahls in Richtung der Verzögerungsplatte (117) umlenkt und/oder reflektiert; und/oder
wobei der polarisierende Strahlteiler (116) zumindest einen Teil, insbesondere mehr als 80%, des vom Werkstück reflektierten Beleuchtungslichts, transmittiert, insbesondere in Richtung der dritten Schnittstelle (106).

14. Verfahren nach einem der Ansprüche 11 bis 13,
wobei als die Verzögerungsplatte (117) eine lambda/4-Platte gewählt wird oder ist; und/oder
wobei die Verzögerungsplatte (117) mehr als 90% des emittierten linear polarisierten Beleuchtungslichtstrahls in einen zirkular polarisierten Beleuchtungslichtstrahl umwandelt; und/oder
wobei die Verzögerungsplatte (117) mehr als 90% des zirkular polarisierten, vom Werkstück reflektierten Beleuchtungslichtstrahls in einen linear polarisierten Beleuchtungslichtstrahl umwandelt; insbesondere in einen linear polarisierten Beleuchtungslichtstrahl, dessen Polarisationsebene senkrecht zur Polarisationsebene des emittierten linear polarisierten Beleuchtungslichtstrahls ist.

15. Verfahren nach einem der Ansprüche 11 bis 14, mit
Bearbeiten des Werkstücks mit dem Bearbeitungslaserstrahl; und/oder Detektieren zumindest eines Teils des von dem Werkstück durch die Austrittsöffnung (112) reflektierten Beleuchtungslichtstrahls (128) mit der Detektoreinrichtung (114), insbesondere zumindest eines Teils des mit der Verzögerungsplatte in einen linear polarisierten Beleuchtungslichtstrahl umgewandelten, vom Werkstück reflektierten zirkular polarisierten Beleuchtungslichtstrahls.
